(19)

Europäisches
Patentamt
European
Patent Office
Office européen
des brevets

(11) **EP 2 075 270 A1**

(12) **EUROPEAN PATENT APPLICATION**

(43) Date of publication:
**01.07.2009 Bulletin 2009/27**

(51) Int Cl.:
*C08F 279/04* (2006.01)     *C08F 279/02* (2006.01)
*C08F 285/00* (2006.01)     *C08L 55/02* (2006.01)

(21) Application number: **08022507.1**

(22) Date of filing: **29.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.12.2007 KR 20070141056**
**03.11.2008 KR 20080108621**

(71) Applicant: **Cheil Industries Inc.**
**Gumi-si**
**Gyeongsangbuk-do 730-030 (KR)**

(72) Inventors:
• **Park, Hwanseok**
**Anyang-si, Gyeonggi-do 431-050 (KR)**

• **Jin, Youngsub**
**Geumcheon-gu, Seoul 153-766 (KR)**
• **Hong, Jaekeun**
**Gunpo-si, Gyeonggi-do 435-010 (KR)**
• **Kim, Sungkwan**
**Gunpo-si, Gyeonggi-do 435-010 (KR)**
• **Lee, Byeongdo**
**Seo-gu, Gwangju 502-746 (KR)**
• **Sun, Horyong**
**Yeosu-si, Jeollanam-do 555-803 (KR)**
• **Lee, Seungdae**
**Suncheon-si, Jeollanam-do 540-764 (KR)**

(74) Representative: **Bublak, Wolfgang**
**Bardehle, Pagenberg, Dost, Altenburg, Geissler,**
**Galileiplatz 1**
**81679 München (DE)**

(54) **Non-glossy rubber modified aromatic vinyl-vinyl cyanide copolymer and method for continuously preparing the same**

(57)     Disclosed herein is a non-glossy rubber modified aromatic vinyl-vinyl cyanide copolymer and a method for continuously preparing the same. The copolymer comprises about 80 to about 93 % by weight of an aromatic vinyl-vinyl cyanide copolymer grafted onto about 7 to about 20 % by weight of a diene-based rubber, and a dispersed phase of the copolymer has an average rubber particle diameter of about 6 to about 20 μm and a span of about 1.2 to about 2.8.

*Fig. 1*

**Description**

The present invention relates to a non-glossy rubber modified aromatic vinyl-vinyl cyanide copolymer and a method for continuously preparing the same. More particularly, the present invention relates to a rubber modified aromatic vinyl-vinyl cyanide copolymer having excellent non-gloss characteristic by controlling a particle size of a rubber phase to have specific ranges, and a method for continuously preparing the same.

Generally, an acrylonitrile-butadiene-styrene(ABS) copolymer resin has been widely used for various products such as inner parts of automobiles, OA supplies, construction materials and the like, in addition to small household and personal items/amenities. Recently, demand for a non-glossy resin which is used for inner parts of automobiles, housings of electronic appliances and the like is increasing. The use of a non-glossy resin without coating for protection of environment is becoming a widespread trend.

The method for preparing a non-glossy ABS resin is classified to three methods. The most widely used method is to apply non-gloss additive-matting agent such as a inorganic filler, an acrylic resin or a cross-linked styrene resin. Another method is to form a rough surface by controlling a rubber particle size of a dispersed phase in an ABS resin, and the rough surface can scatter light, which results in a low gloss. Other method is to remove gloss during a post processing procedure. In addition, there is a method of obtaining non-gloss effect by using an etching mold during an injection molding process or a coating process.

Although the method of obtaining non-glossy characteristic by using the non-gloss additive-matting agent is convenient to carry out in various aspects, there is a drawback in that homogeneous gloss may not be obtained depending on the distribution of the additive. In addition, the method of using an etching mold during an injection molding process or a coating process can cause high production cost and is not environmentally friendly. On the other hand, the method of forming a rough surface by controlling a rubber particle size has an advantage in that the method can provide high quality non-glossy characteristic without an additional process in a continuous bulk polymerization.

In order to obtain low gloss by controlling the rubber particle diameter, it needs to modulate various conditions in a polymerization process appropriately. Bulk polymerization or solution polymerization is more suitable than emulsion polymerization for controlling the rubber particle diameter. It is impossible to obtain a rubber particle diameter of 1 $\mu$m or more in the ABS resin prepared from the emulsion polymerization. On the contrary, high-impact polystyrene(HIPS) prepared from the bulk polymerization can easily have a rubber particle diameter of about 2-3 $\mu$m. An ABS resin prepared from the bulk polymerization or solution polymerization usually has a particle diameter of 1 $\mu$m or less.

In preparation of an ABS resin by using a continuous process of bulk polymerization or solution polymerization, it is known that three factors have an important role in controlling a rubber particle diameter (Rubber-Toughened Plastics, C. Keith Riew, Advances in chemistry series 222, 1987). Three factors for controlling a rubber particle size are a shear force generated by stirring force of a reactor, a viscosity ratio between a dispersed phase and a continuous phase, and an interfacial force between the two phases. In general, as a stirring rate of a reactor is faster, a shear force become strong and thus a rubber particle size become small. However, if the stirring rate is too fast, dispersed particles may be reunited and the rubber particle size may become larger. As for a viscosity ratio between a dispersed phase(rubber) and a continuous phase(SAN), it is understood that when the viscosity ratio, namely, (viscosity of a dispersed phase)/ (viscosity of a continuous phase) increases, the rubber particle size increases. Further, it is also understood that when the interfacial force between a dispersed phase and a continuous phase increases, a particle size decreases.

European Patent Publication No. 412,801 discloses an ABS resin having a small particle diameter of about 0.5 $\mu$m or less and a large particle diameter of about 1-2 $\mu$m. European Patent Publication No. 277,687 discloses an example in which a branch type rubber is used to decrease a solution viscosity.

Japanese Patent Publication No. 8-120032 discloses an ABS resin having a rubber particle size similar to that of aforementioned invention which shows improved surface gloss by going through the extrusion process.

U.S. Patent No. 5,250,611 discloses a method for preparing an ABS product having good physical properties by using low temperature free radical initiator and a tube reactor, U.S. Patent No. 5,223,577 discloses a method for continuously preparing an ABS resin by using SBR rubber. However, these methods are used only for preparing products with an average particle diameter of 1 $\mu$m or less.

Although U.S. Patent No. 4,277,574 discloses an ABS product having a bimodal rubber particle size of 0.01~0.5 $\mu$m (small) and 0.7~10 $\mu$m (large), the invention is not directed to the non-glossy ABS resin, since the size of a large rubber particle used substantially in the invention is limited to 0.8-3 $\mu$m and the object of the invention is to provide a good balance of physical properties.

As such, the conventional inventions have been focusing on making a rubber particle size to be less than 1 $\mu$m or partly introducing a rubber having a large particle diameter of 1-3 $\mu$m to improve physical properties. Although the products prepared from these methods have advantages such as good color, purity, low cost, and so forth, compared to ABS products prepared by a conventional emulsion polymerization, they are not desirable in terms of physical properties.

Accordingly, the present inventors have developed a non-glossy rubber modified aromatic vinyl-vinyl cyanide copolymer in which a dispersed phase has an average rubber particle diameter of about 6-20 $\mu$m and a span of about 1.2~2.8 by controlling types of rubber, a stirring velocity of a reactor and a conversion rate, and a method for continuously preparing the same. Furthermore, the present inventors have developed a novel method for preparing a non-glossy rubber modified aromatic vinyl-vinyl cyanide copolymer product which it is difficult to obtain by using conventional methods such as emulsion polymerization or continuous polymerization, by applying a conventional continuous polymerization apparatus.

An object of the present invention is to provide a non-glossy rubber modified aromatic vinyl-vinyl cyanide copolymer in which a dispersed phase has an average particle diameter of about 6 to about 20 $\mu$m and a spin thereof is about 1.2 to about 2.8.

Another object of the present invention is to provide a non-glossy rubber modified aromatic vinyl-vinyl cyanide copolymer having a 60° gloss value of about 1~10 measured for a test specimen with a thickness of 2mm using a BYK-Gardner gloss meter.

A further object of the present invention is to provide a non-glossy rubber modified aromatic vinyl-vinyl cyanide copolymer having homogeneous non-glossy characteristic.

A further object of the present invention is to provide a non-glossy rubber modified aromatic vinyl-vinyl cyanide copolymer having excellent chemical resistance.

A further object of the present invention is to provide a non-glossy rubber modified aromatic vinyl-vinyl cyanide copolymer having good appearance and color.

A further object of the present invention is to provide a novel method for preparing the foregoing non-glossy rubber modified aromatic vinyl-vinyl cyanide copolymer by continuous polymerization.

A further object of the present invention is to provide a continuous polymerization method for preparing the foregoing non-glossy rubber modified aromatic vinyl-vinyl cyanide copolymer by using a conventional continuous polymerization apparatus.

A further object of the present invention is to provide a method for preparing stably the foregoing non-glossy rubber modified aromatic vinyl-vinyl cyanide copolymer.

Other objects and advantages of this invention will be apparent from the ensuing disclosure and appended claims.

These objects have been achieved by the provision of a non-glossy rubber modified aromatic vinyl-vinyl cyanide copolymer. The copolymer comprises about 80 to about 93 % by weight of an aromatic vinyl-vinyl cyanide copolymer grafted onto about 7 to about 20 % by weight of a diene-based rubber, and an average rubber particle diameter of a dispersed phase thereof ranges from about 6 to about 20 $\mu$m and a span thereof ranges from about 1.2 to about 2.8.

The aromatic vinyl-vinyl cyanide copolymer of the present invention may comprise about 60 to about 90 % by weight of an aromatic vinyl compound and about 10 to about 40 % by weight of vinyl cyanide compound. The non-glossy rubber modified aromatic vinyl-vinyl cyanide copolymer may have a 60° gloss value of about 1~10 measured for a test specimen with a thickness of 2mm using a BYK-Gardner gloss meter and a 60° gloss value of about 1~ 5.5 measured for a test specimen with a thickness of 0.02mm using a BYK-Gardner gloss meter.

Another aspect of the present invention provides a method for preparing a non-glossy rubber modified aromatic vinyl-vinyl cyanide copolymer. The method comprises preparing a reaction solution by mixing a mixed solution comprising an aromatic vinyl compound, a vinyl cyanide compound, a diene-based rubber and a solvent with a polymerization initiator and a molecular weight control agent; polymerizing the reaction solution by continuously introducing the reaction solution into a first reactor to a conversion rate of about 30 to about 40 %; and polymerizing a polymerization product prepared from the first reactor by continuously introducing the polymerization product into a second reactor to a conversion rate of about 70 to about 80 %.

The solvent may be an aromatic organic solvent. In an exemplary embodiment, the solvent may be at least one selected from the group consisting of ethylbenzene, xylene, and toluene.

In some exemplary embodiments, the diene-based rubber may have a solution viscosity of about 150 to about 300 cps in 5% styrene solution.

In some exemplary embodiments, the mixed solution may comprise about 40~60 % by weight of an aromatic vinyl compound, about 10~ 25 % by weight of a vinyl cyanide compound, about 7~20 % by weight of a diene-based rubber, and about 5~30 % by weight of a solvent.

In some exemplary embodiments, the first reactor may have a stirring rate of about 60~150 rpm, and the second reactor may have a stirring rate of about 50~100 rpm.

The polymerization initiator may have a half-life of about 10 minutes or less at polymerization temperature.

In some exemplary embodiments, the method may further comprise the step of devolatilizing the polymerization product prepared from the second reactor. The devolatilizing process may be conducted using a devolatile apparatus. In an exemplary embodiment, during the devolatilizing process, the unreacted monomer remained in a first devolatile apparatus and a second devolatile apparatus which are serially connected may be removed.

The first devolatile apparatus may be operated under the conditions of about 160 to about 240°C and about 100 to about 600 Torr, and the second devolatile apparatus may be operated under the conditions of about 210 to about 250°C and about 1 to about 50 Torr.

The non-glossy rubber modified aromatic vinyl-vinyl cyanide copolymer prepared by the method may have a 60° gloss value of about 1~10 measured for a test specimen with a thickness of 2mm using a BYK-Gardner gloss meter.

The invention will be described more fully hereinafter by reference to the following drawings

**Brief Description of the Drawing**

FIG. 1 is a TEM image showing the non-glossy rubber modified aromatic vinyl-vinyl cyanide copolymer prepared in Example 1

FIG. 2 is a TEM image showing the non-glossy rubber modified aromatic vinyl-vinyl cyanide copolymer prepared in Example 2

FIG. 3 is a TEM image showing the non-glossy rubber modified aromatic vinyl-vinyl cyanide copolymer prepared in Example 3

The present invention provides a non-glossy rubber modified aromatic vinyl-vinyl cyanide copolymer. The copolymer comprises about 80 to about 93 % by weight of an aromatic vinyl-vinyl cyanide copolymer grafted onto about 7 to about 20 % by weight of a diene-based rubber, and an average rubber particle diameter of a dispersed phase thereof ranges from about 6 to about 20 $\mu$m. In an exemplary embodiment, an average rubber particle diameter of a dispersed phase thereof ranges from about 6.5 to about 15 $\mu$m. In another exemplary embodiment, an average rubber particle diameter of a dispersed phase thereof ranges from about 10 to about 20 $\mu$m. The average rubber particle diameter hereinafter refers to a volume average particle size measured using Mastersizer S Ver.2.14 manufactured by Malvern Co., Ltd..

The dispersed phase has an average rubber particle diameter of about 6 to about 20 $\mu$m and a span of about 1.2 to about 2.8. In an exemplary embodiment, the span may be about 1.3 to about 2.0. In another exemplary embodiment, the span may be about 2.1 to about 2.6. In other exemplary embodiment, the span may be about 1.5 to about 2.5. In other exemplary embodiment, the span may be 1.3, 1.4, 1.5, 1.6, 1.7, 1.8, 1.9, 2.0, 2.1, 2.2, 2.3, 2.4, 2.5, 2.6, 2.7 or 2.75. In the present invention, span is an indicator showing how broadly the particle size distributes in particle size distribution curve, and may be calculated as in the following equation:

$$\textbf{Span} = \textbf{D[V, 0.9]-D[V, 0.1]/D[V, 0.5]}$$

(wherein, D[V, 0.9] is a particle diameter in a volume fraction 0.9 , D[V, 0.1] is a particle diameter in a volume fraction 0.1, and D[V, 0.5] is a particle diameter in a volume fraction 0.5)

The above rubber particle diameter characteristics show that the particle diameter of the copolymer of the present invention is relatively large compared to the conventional rubber modified aromatic vinyl-vinyl cyanide copolymers and the characteristics result in a good non-glossy property.

The diene-based rubber forms a dispersed phase and may be polybutadiene, butadiene-styrene copolymer or mixture thereof. The amount of the diene-based rubber may be about 7 to about 20 % by weight, preferably about 10 to about 17 % by weight per total copolymer. In an exemplary embodiment, the diene-based rubber may include about 10.5 to about 15 % by weight of a rubber. In another exemplary embodiment, rubber particle grafted with an aromatic vinyl compound and cyanide vinyl compound may form a dispersed phase.

The aromatic vinyl-vinyl cyanide copolymer forms a continuous phase. In an exemplary embodiment, the aromatic vinyl-vinyl cyanide copolymer may comprise about 60 to about 90 % by weight of an aromatic vinyl compound and about 10 to about 40 % by weight of a vinyl cyanide compound. In another exemplary embodiment, the aromatic vinyl-vinyl cyanide copolymer may comprise about 65 to about 85 % by weight of an aromatic vinyl compound and about 15 to about 35 % by weight of a vinyl cyanide compound. In other exemplary embodiment, the aromatic vinyl-vinyl cyanide copolymer may comprise about 70 to about 83 % by weight of an aromatic vinyl compound and about 17 to about 30 % by weight of a vinyl cyanide compound.

Examples of the aromatic vinyl compound may include, but are not limited to, styrene, $\alpha$-methylstyrene, p-methylstyrene and the like. The compounds may be used alone or in combination with one another.

Examples of the vinyl cyanide compound may include, but are not limited to, acrylonitrile, methacrylonitrile, ethacrylonitrile and the like. The compounds may be used alone or in combination with one another.

The present invention provides a novel method for continuously preparing the foregoing non-glossy rubber modified aromatic vinyl-vinyl cyanide copolymer. The foregoing non-glossy rubber modified aromatic vinyl-vinyl cyanide copolymer may be prepared by a continuous solution polymerization.

In an exemplary embodiment, the method may comprise preparing a reaction solution by mixing a mixed solution comprising an aromatic vinyl compound, a vinyl cyanide compound, a diene-based rubber and a solvent with a polymerization initiator and a molecular weight control agent; polymerizing the reaction solution by continuously introducing the reaction solution into a first reactor to a conversion rate of about 30 to about 40 %; and polymerizing a polymerization product prepared from the first reactor by continuously introducing the polymerization product into a second reactor to a conversion rate of about 70 to about 80 %.

In an exemplary embodiment, the mixed solution may comprises about 40 to about 60 % by weight of an aromatic vinyl compound, about 10 to about 25 % by weight of a vinyl cyanide compound, about 7 to about 20 % by weight of a diene-based rubber, and about 5 to 30 % by weight of a solvent.

Examples of the aromatic vinyl compound may include styrene, $\alpha$-methylstyrene, p-methylstyrene, and the like, and the compounds may be used alone or in combination with one another.

Examples of the vinyl cyanide compound may include acrylonitrile, methacrylonitrile, ethacrylonitrile, and the like, and the compounds may be used alone or in combination with one another.

The diene-based rubber may be polybutadiene, butadiene-styrene copolymer or mixture thereof.

The diene-based rubber may have a solution viscosity of about 150 cps or more, preferably about 150 to about 300 cps, more preferably about 160 to about 200 cps in 5% styrene solution. If the solution viscosity values lie out of those above ranges of the present invention, it may be difficult to control a rubber particle diameter. In an exemplary embodiment, the diene-based rubber may have a solution viscosity of about 165 to about 250 cps in 5% styrene solution. In another exemplary embodiment, the diene-based rubber may have a solution viscosity of about 170 to about 280 cps in 5% styrene solution.

The solvent may be an aromatic organic solvent. Examples of the aromatic organic solvent may include ethylbenzene, xylene, toluene, and the like, and the solvents may be used alone or in combination with one another.

The polymerization initiator may have a half-life of about 10 minutes or less at polymerization temperature of the reactor. The polymerization initiator may be a radical initiator. The polymerization initiator may be used in an amount of about 0.007 to about 0.07 parts by weight, preferably about 0.01 to about 0.05 parts by weight, per 100 parts by weight of the mixed solution. If the polymerization initiator has a half-life longer than 10 minutes, or if the amount is more than about 0.07, the polymerization initiator may still remain during the devolatilizing process and it may cause various problems in appearance.

Examples of the polymerization initiator may include without limitation 1,1-bis(t-butylperoxy)-2-methylcyclohexane, 1,1-bis(t-butylperoxy)cyclohexane, 2-bis(4,4-di-t-butylperoxy cyclohexane)propane, t-hexyl peroxy isopropyl monocarbonate, t-butyl peroxymaleic acid, t-butyl peroxy-3,5,5-trimethyl hexanoate, t-butyl peroxylaurate, 2,5-dimethyl-2,5-bis(m-toluoyl peroxy)hexane, t-butyl peroxy isopropyl monocarbonate, t-butyl peroxy 2-ethylhexyl monocarbonate, t-hexyl peroxybenzoate, 2,5-dimethyl-2,5-bis(benzoyl peroxy)hexane, t-butyl peroxyacetate, 2,2-bis(t-butyl peroxy)butane, t-butyl peroxybenzoate, n-butyl-4,4-bis(t-butyl peroxy) valerate and mixture thereof.

Further, examples of the molecular weight control agent used in the present invention may include alkyl mercaptan such as t-dodecyl mercaptan, n-dodecyl mercaptan and the like, and t-dodecyl mercaptan is preferable. The molecular weight control agent may be used in an amount of about 0.02 to about 1 part by weight, preferably about 0.03 to about 0.5 parts by weight per 100 parts by weight of the mixed solution.

A reaction apparatus used in the present invention has no limitation, but it is desirable to be equipped with a cooling jacket or a cooling coil since an exothermic phenomenon occurs during the polymerization reaction.

The reaction solution including the polymerization initiator and a molecular weight control agent may be introduced into the first reactor and polymerized to a conversion of about 30 to about 40 %. In an exemplary embodiment, the reaction solution may be polymerized to a conversion of about 32 to about 38 %. If conversion rate is less than 30 %, the gloss degree may increase so that desired gloss cannot be obtained. If conversion rate is more than 40 %, the excessive load may be applied to the agitator so that polymerization may not be carried out stably.

The first reactor may have reaction temperature of about 60 to about 150°C preferably about 70 to about 130°C and the reaction temperature may be modulated according to a reactor, a stirring rate, types of an initiator, and the like.

In an exemplary embodiment, the first reactor may be controlled to have a stirring rate of about 60 to about 150 rpm, preferably about 80 to about 120 rpm. If the stirring rate is out of those above ranges, it may be difficult to form a rubber particle. The stirring rate may be modulated according to the size of a reactor, types of an initiator, reaction temperature, and the like. In another exemplary embodiment, the first reactor may be controlled to have a stirring rate of about 90 to about 130 rpm, or about 100 to about 140 rpm.

The polymerization product obtained from the first reactor may be introduced into the second reactor and polymerized to a conversion of about 70 to 80%. Within these ranges, homogeneous non-gloss can be obtained. The second reactor may have reaction temperature of about 80 to about 170°C, preferably about 120 to about 160°C, and the reaction temperature may be modulated according to a reactor, a stirring rate, types of an initiator, and the like.

In an exemplary embodiment, the second reactor may be controlled to have a stirring rate of about 50 to about 100 rpm, preferably about 60 to about 80 rpm, and the stirring rate may be modulated according to the size of a reactor, types of an initiator, reaction temperature, and the like. In some exemplary embodiments, the stirring rate may be controlled to be about 65 to about 90 rpm or about 67 to about 85 rpm. Within these ranges, desired non-gloss of the present invention can be obtained.

In another exemplary embodiment, the method may further comprise the step of devolatilizing a polymerization product obtained from the second reactor. The devolatilizing process may be conducted using a devolatile apparatus. In some embodiments, the devolatilizing process may use a single devolatile apparatus. In an exemplary embodiment, the devolatilizing process may remove an unreacted monomer remained in a first devolatile apparatus and a second devolatile apparatus which are serially connected. In the case of going through the devolatilizing process, the amount of the unreacted monomer may be about 1500 ppm or less, preferably about 1000 ppm or less, more preferably about 700 ppm or less, most preferably about 500 ppm or less.

In an exemplary embodiment, the polymerization product may be transferred to a devolatile apparatus to remove unreacted monomer and solvent. The devolatile apparatus has no limitation, but it is important to make retention time short in the devolatile appartus. As a devolatile apparatus, fall-stranding type devolatile apparatus is preferred. A cone of the fall-stranding type should be designed to minimize the retention time in the devolatile apparatus.

In an exemplary embodiment, the first devolatile apparatus and the second devolatile apparatus may be connected, preferably serially connected, in order to minimize connecting line between the two devolatile apparatuses. Further, it is preferable that a control valve or a regulator may be equipped in the first devolatile apparatus (DV-1) to control pressure.

In an exemplary embodiment, the first devolatile apparatus may be operated at about 100 to about 600 Torr and at about 160-240°C for a retention time of less than about 10 minutes. It is preferable that the pressure may range from about 200 to about 500 Torr, and the temperature may range from about 180 to about 220°C. If the pressure is less than 100 Torr, productivity may be deteriorated, and if the pressure is more than 600 Torr, the amount of the unreacted monomer may increase. If the temperature is lower than about 160°C, it is difficult to transfer the reactant and also the amount of the unreacted monomer may increase, if the temperature is higher than about 240°C, YI of products may increase.

In addition, the second devolatile apparatus may be operated at about 1 to about 50 Torr and at about 210-250°C for a retention time of less than about 10 minutes, preferably less than about 5 minutes. If the retention time is more than about 10 minutes, color quality may be deteriorated due to thermal history.

The non-glossy rubber modified aromatic vinyl-vinyl cyanide copolymer prepared by the method of the present invention may have an average rubber particle diameter of about 6~20 μm and a 60° gloss value of about 10 or less measured for a test specimen with a thickness of 2mm using a BYK-Gardner gloss meter, and thus show excellent non-gloss and maintain a homogeneous gloss pattern in the broad region.

In an exemplary embodiment, the non-glossy rubber modified aromatic vinyl-vinyl cyanide copolymer may have a 60° gloss value of about 1~ 10 measured for a test specimen with a thickness of 2mm using a BYK-Gardner gloss meter, and a 60° gloss value of about 1~5.5 measured for a test specimen with a thickness of 0.02mm using a BYK-Gardner gloss meter.

In another exemplary embodiment, the non-glossy rubber modified aromatic vinyl-vinyl cyanide copolymer may have a 60° gloss value of about 4~8.5 measured for a test specimen with a thickness of 2mm using a BYK-Gardner gloss meter, and a 60° gloss value of about 1~ 5 measured for a test specimen with a thickness of 0.02mm using a BYK-Gardner gloss meter.

Furthermore, a sheet of L 0.05 m × W 1 m, × T 0.02 mm produced by using the non-glossy rubber modified aromatic vinyl-vinyl cyanide copolymer may have a standard deviation of the gloss measurements of about 0.3 or less, preferably about 0.25 or less, and a sheet of L 1 m × W 1 m, × T 2 mm produced by using the non-glossy rubber modified aromatic vinyl-vinyl cyanide copolymer may have a standard deviation of the gloss measurements of about 0.4 or less, preferably about 0.35 or less

The non-glossy rubber modified aromatic vinyl-vinyl cyanide copolymer may be applied in various products. In particular, since the copolymer exhibits high-quality appearance due to non-glossy characteristic, it can be applied for internal parts of automobiles, interior material or housing of electric/electronic goods which need good appearance. Furthermore, according to the present invention, non-gloss can be obtained without inorganic additives and light-weight products can be obtained, in addition to obtain homogeneous gloss without deterioration of physical properties of the resin.

The invention may be better understood by reference to the following examples which are intended for the purpose of illustration and are not to be construed as in any way limiting the scope of the present invention, which is defined in the claims appended hereto.

**Examples**

**Example 1**

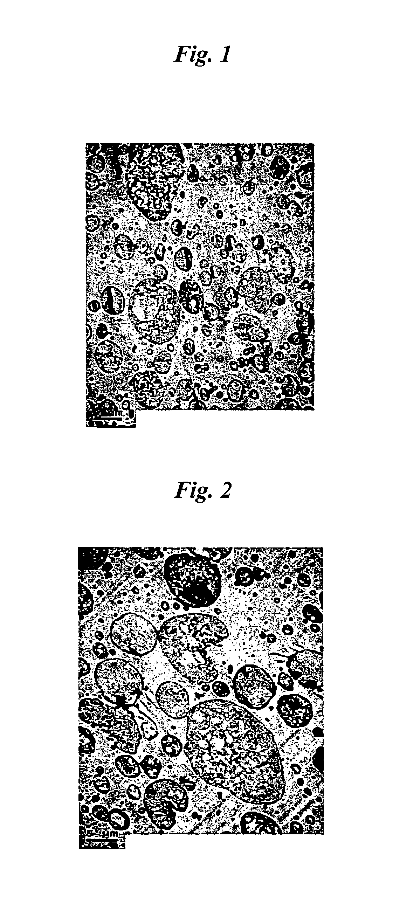

To the mixed solution comprising 53.4 parts by weight of styrene, 17.8 parts by weight of acrylonitrile and 20 parts by weight of ethyl benzene, a butadiene rubber having a solution viscosity of 170 cps in 5 % styrene solution (BR-1 : ASADENE 55AE) was added and dissolved, and then 0.015 parts by weight of 1,1-bis(t-butylperoxy)cyclohexane as a initiator and 0.07 parts by weight of t-dodecyl mercaptan as a molecular weight control agent were added to prepare a reaction solution. The prepared reaction solution was fed into reactors at 25 kg/hr. The first reactor was controlled to have a stirring rate of 120 rpm and a conversion rate of 35 % and the second reactor was controlled to have a stirring rate of 70 rpm and a conversion rate of 75 % during polymerizing. Then, the reactant discharged from the reactors was continuously transferred to a devolatile apparatus to remove an unreacted monomer and the polymerization product was then pelletized to obtain an ABS resin. The average rubber particle diameter of the ABS resin prepared in Example 1 was about 6. 16 $\mu$m. The TEM image of the rubber particle is shown in FIG 1.

Furthermore, a sheet-1 of L 0.05 m $\times$ W 1 m, $\times$ T 0.02 mm and a sheet-2 of L 1 m $\times$ W 1 m, $\times$ T 2 mm were produced by using the prepared ABS resin and gloss degree was measured on the different spots. The results are shown in Table 1

**Example 2**

Example 2 was conducted in the same manner as in the Example 1 except that a stirring rate of the first reactor was 100 rpm. The average rubber particle diameter of the ABS resin prepared in Example 2 was 8.58 $\mu$m. The TEM image of the rubber particle is shown in FIG 2.

**Example 3**

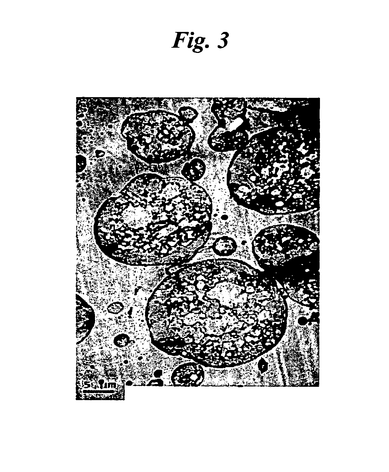

Example 3 was conducted in the same manner as in the Example 1 except that a stirring rate of the first reactor was 80 rpm. The average rubber particle diameter of the ABS resin prepared in Example 3 was 14.11 $\mu$m. The TEM image of the rubber particle is shown in FIG 3.

**Comparative Example 1**

Comparative Example 1 was conducted in the same manner as in the Example 1 except that a butadiene rubber having a solution viscosity of 45 cps in 5 % styrene solution (BR-2 : ASAPRENE 700A) was used. The average rubber particle diameter of the ABS resin prepared in Comparative Example 1 was 1.37 $\mu$m.

**Comparative Example 2**

Comparative Example 2 was conducted in the same manner as in the Example 1 except that a conversion rate of the first reactor was 25%. The average rubber particle diameter of the ABS resin prepared in Comparative Example 2 was 3.02 $\mu$m.

**Comparative Example 3**

Comparative Example 3 was conducted in the same manner as in the Example 1 except that a conversion rate of the first reactor was 45%. An ABS resin was not stably prepared since excessive load was applied on the agitator of the first reactor.

**Comparative Example 4**

Comparative Example 4 was conducted in the same manner as in the Example 1 except that a stirring rate of the first reactor was 80 rpm. An ABS resin was not stably prepared since the rubber particle was not formed in the first reactor.

**Comparative Example 5**

To 100 parts by weight of the ABS resin prepared by the emulsion polymerization, 5 parts by weight of an organic matting agent (BMAT, GE specialty chemical Co. Ltd.) and 5 parts by weight of talc as an inorganic filler were added to prepare a mixture. The mixture was extruded to prepare ABS resin in a pellet form. A sheet was prepared in the same manner as in the Example 1.

The physical properties of the test specimens were measured in accordance with the following methods

(1) Average rubber particle diameter ($\mu$m) and span: The average rubber particle diameter was measured using Mastersizer S Ver.2.14 manufactured by Malvern Co., Ltd.. Span was calculated using the equation of D[V, 0.9]-D [V, 0.1]/D[V, 0.5] (- D[V, 0.1] refers to a particle diameter in volume fraction 0.1)

(2) Chemical resistance: Break Strain (%) was measured under the conditions of 0.6% strain and 60 mm/min, after contacting the test specimen with cyclopentane in a urethane foaming method for 3 hours.

(3) Gloss: The 60 degree gloss was measured using BYK-Gardner Gloss Meter.

(4) Standard deviation of the gloss measurement: The gloss was measured on 10 different spots for a sheet-1 ofL 0.05 m × W 1 m, × T 0.02 mm and a sheet-2 of L 1 m × W 1 m, × T 2 mm which were produced by using the prepared ABS resin, and then the standard deviation of the gloss measurements was calculated.

**Table 1**

| | | | Examples | | | Comparative Examples | | | | |
|---|---|---|---|---|---|---|---|---|---|---|
| | | | 1 | 2 | 3 | 1 | 2 | 3 | 4 | 5 |
| condition | | Rubber type | BR-1 | BR-1 | BR-1 | BR-2 | BR-1 | BR-1 | BR-1 | - |
| | | Stirring rate of the 120 first reactor(RPM) | 120 | 100 | 80 | 120 | 120 | 120 | 50 | - |
| | | Stirring rate of the second reactor (RPM) | 70 | 70 | 70 | 70 | 70 | 70 | 70 | - |
| | | Conversion rate of the first reactor (%) | 35 | 35 | 35 | 35 | 25 | 45 | 35 | - |
| | | Conversion rate of the second reactor (%) | 75 | 75 | 75 | 75 | 75 | 75 | 75 | - |
| Physical | | Average rubber particle diameter ($\mu$m) | 6.16 | 8.58 | 14.11 | 1.37 | 3.02 | - | - | 0.2 |
| properties | Span | | 1.3 | 1.5 | 2.4 | 1.1 | 1.2 | - | - | 1.0 |
| | Chemical resistance | | 12.7 | 12.8 | 13.0 | 8.0 | 9.4 | - | - | 8.2 |
| | Sheet-1 | Gloss degree | 4 | 4 | 3 | 38 | 25 | - | - | 4 |
| | | Standard deviation | 0,2 | 0.2 | 0.2 | 0.5 | 0.4 | - | - | 5.2 |
| | Sheet-2 | Gloss degree | 8 | 8 | 7 | 75 | 43 | - | - | 12 |
| | | Standard deviation | 0.3 | 0.3 | 0.3 | 0.6 | 0.5 | - | - | 8.0 |

\* Sheet-1 : L 0.05 m × W 1 m × T 0.02 mm , no contact with Roller.
\* Sheet-2 : L 1 m × W 1 m × T 2 mm, Roller temperature 80 °C.

As shown in Table 1, the ABS resins prepared in Examples 1 to 3 have a surface gloss of 10 or less and exhibit good non-gloss characteristic. Also, when the ABS resins are prepared by continuous solution polymerization, it can be seen that the ABS resins maintain a homogeneous gloss pattern in the broad region as well as non-gloss characteristic. In contrast, when the additive is added to obtain non-gloss characteristic as in Comparative Example 5, the ABS resin exhibits large standard deviation, thereby limiting its application in terms of homogeneous gloss. Moreover, the ABS resins prepared according to the present invention exhibits good chemical resistance compared to the conventional ABS resins, thus the ABS resin of the present invention can be effectively applied for more various products.

This application claims two priorities from Korean Patent Application No. 10-2007-141056 filed on December 28, 2007 and Korean Patent Application No. 10-2008-108621 filed on November 3, 2008, the disclosures of which are incorporated herein by references in their entireties.

**Claims**

1. A non-glossy rubber modified aromatic vinyl-vinyl cyanide copolymer comprising about 80 to about 93 % by weight of an aromatic vinyl-vinyl cyanide copolymer grafted onto about 7 to about 20 % by weight of a diene-based rubber, wherein a dispersed phase of the copolymer has an average rubber particle diameter of about 6 to about 20 $\mu$m and a span of about 1.2 to about 2.8.

2. The copolymer of Claim 1, wherein said aromatic vinyl-vinyl cyanide copolymer comprises about 60 to about 90 % by weight of an aromatic vinyl compound and about 10 to about 40 % by weight of vinyl cyanide compound.

3. The copolymer of Claim 1 or 2, wherein said diene-based rubber is polybutadiene, butadiene-styrene copolymer or mixture thereof; the aromatic vinyl compound is styrene,$\alpha$-methylstyrene, p-methylstyrene, or mixture thereof; the vinyl cyanide compound is acrylonitrile, methacrylonitrile, ethacrylonitrile or mixture thereof.

4. The copolymer of any of Claims 1 to 3, wherein said non-glossy rubber modified aromatic vinyl-vinyl cyanide copolymer has a 60° gloss value of about 1~10 measured for a test specimen with a thickness of 2mm using a BYK-Gardner gloss meter and a 60° gloss value of about 1~ 5.5 measured for a test specimen with a thickness of 0.02mm using a BYK-Gardner gloss meter.

5. A method for continuously preparing a non-glossy rubber modified aromatic vinyl-vinyl cyanide copolymer comprising:

   preparing a reaction solution by mixing a mixed solution comprising an aromatic vinyl compound, a vinyl cyanide compound, a diene-based rubber and a solvent with a polymerization initiator and a molecular weight control agent;
   polymerizing the reaction solution by continuously introducing the reaction solution into a first reactor to a conversion rate of about 30 to about 40 %; and
   polymerizing a polymerization product prepared from the first reactor by continuously introducing the polymerization product into a second reactor to a conversion rate of about 70 to about 80 %.

6. The method of Claim 5, wherein said solvent is selected from the group consisting of ethylbenzene, xylene, and toluene.

7. The method of Claim 5 or 6, wherein said diene-based rubber has a solution viscosity of about 150 to about 300 cps in 5% styrene solution.

8. The method of any of Claims 5 to 7, wherein said mixed solution comprises about 40~60 % by weight of an aromatic vinyl compound, about 10~ 25 % by weight of a vinyl cyanide compound, about 7~20 % by weight of a diene-based rubber, and about 5~30 % by weight of a solvent.

9. The method of any of Claims 5 to 8, wherein said first reactor has a stirring rate of about 60~150 rpm, and said second reactor has a stirring rate of about 50~100 rpm.

10. The method of any of Claims 5 to 9, wherein said polymerization initiator has a half-life of about 10 minutes or less at polymerization temperature.

11. The method of Claim 10, wherein said polymerization initiator is selected from the group consisting of 1,1-bis(t-butylperoxy)-2-methylcyclohexane, 1,1-bis(t-butylperoxy)cyclohexane, 2-bis(4,4-di-t-butylperoxy cyclohexane)propane, t-hexyl peroxy isopropyl monocarbonate, t-butyl peroxymaleic acid, t-butyl peroxy-3,5,5-trimethyl hexanoate, t-butyl peroxylaurate, 2,5-dimethyl-2,5-bis(m-toluoyl peroxy)hexane, t-butyl peroxy isopropyl monocarbonate, t-butyl peroxy 2-ethylhexyl monocarbonate, t-hexyl peroxybenzoate, 2,5-dimethyl-2,5-bis(benzoyl peroxy)hexane, t-butyl peroxyacetate, 2,2-bis(t-butyl peroxy)butane, t-butyl peroxybenzoate, n-butyl-4,4-bis(t-butyl peroxy) valerate and mixture thereof.

12. The method of any of Claims 5 to 11, further comprising devolatilizing a polymerization product prepared from the second reactor.

13. The method of Claim 12, wherein said devolatilizing process comprising removing an unreacted monomer remained in a first devolatile apparatus and a second devolatile apparatus which are serially connected.

14. The method of Claim 13, wherein said first devolatile apparatus is operated under the conditions of about 160 to about 240°C and about 100 to about 600 Torr, and said second devolatile apparatus is operated under the conditions of about 210 to about 250°C and about 1 to about 50 Torr.

*Fig. 1*

*Fig. 2*

*Fig. 3*

EUROPEAN SEARCH REPORT

Application Number

EP 08 02 2507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 277 574 A (JASTRZEBSKI MICHAEL B ET AL) 7 July 1981 (1981-07-07) <br> * column 2, line 65 - "10 microns" * <br> * column 2, line 40 - column 3, line 38 * <br> * column 4, lines 49-55 * <br> * column 9, lines 13-20 * <br> * column 14, lines 24-30 * <br> * claims 1-5,10,19 * <br> * examples * <br> ----- | 1-4 | INV. <br> C08F279/04 <br> C08F279/02 <br> C08F285/00 <br> C08L55/02 |
| X | US 5 223 577 A (BAUMGARTNER EHRENFRIED [DE] ET AL) 29 June 1993 (1993-06-29) <br> * abstract * <br> * column 3, lines 3-24 * <br> * column 4, line 54 * <br> * column 3, line 54 - column 5, line 23 * <br> * claims 1,2 * <br> ----- | 1-4 | |
| X | US 4 587 294 A (MATSUBARA TETSUYUKI [JP] ET AL) 6 May 1986 (1986-05-06) <br> * claims 1,2 * <br> * column 3, lines 33-35 * <br> * column 4, line 22 - column 5, line 40 * <br> * column 3, lines 53-65; examples * <br> ----- | 1-14 | TECHNICAL FIELDS SEARCHED (IPC) <br><br> C08F <br> C08L |
| X | EP 0 412 801 A1 (DOW CHEMICAL CO [US]) 18 May 1994 (1994-05-18) <br> * abstract * <br> * page 2, line 50-55 - "10 microns" * <br> * page 2, lines 50-55 * <br> * page 3, lines 52-58; claims 1-13 * <br> ----- | 1-4 | |
| X | EP 0 808 856 B (ENICHEM SPA [IT]) 19 September 2001 (2001-09-19) <br> * page 3, lines 36-38 * <br> * page 3, lines 55-58 * <br> ----- <br> -/-- | 1-4 | |

The present search report has been drawn up for all claims

| Place of search | Date of completion of the search | Examiner |
|---|---|---|
| The Hague | 9 March 2009 | Hammond, Andrew |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 02 2507

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 94/12551 A (DOW CHEMICAL CO [US]) 9 June 1994 (1994-06-09) * claims 1-4 * * page 4, lines 1-3 * * page 2, lines 21-33 * ----- | 1-4 | |
| A | US 5 250 611 A (BAUMGARTNER EHRENFRIED [DE] ET AL) 5 October 1993 (1993-10-05) * claim 1 * * column 1, line 1 - column 4, line 33 * ----- | 1-14 | |
| A | WO 02/051894 A (CHEIL INDUSTIRES INC [KR]; PARK JAE BUM [KR]; HA DOO HAN [KR]; LIM YON) 4 July 2002 (2002-07-04) * claims 1-7 * ----- | 1-14 | |
| A | KR 2000 0055398 A (CHEIL IND INC) 5 September 2000 (2000-09-05) * abstract * ----- | 1-14 | |
| A | US 4 732 807 A (MAEDA TETSURO [JP] ET AL) 22 March 1988 (1988-03-22) * abstract * * column 2, lines 32-48; claims 1-5 * ----- | 1-14 | TECHNICAL FIELDS SEARCHED (IPC) |

The present search report has been drawn up for all claims

| Place of search | Date of completion of the search | Examiner |
|---|---|---|
| The Hague | 9 March 2009 | Hammond, Andrew |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 08 02 2507

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2009

| Patent document cited in search report | | Publication date | Patent family member(s) | | Publication date |
|---|---|---|---|---|---|
| US 4277574 | A | 07-07-1981 | AU | 533068 B2 | 27-10-1983 |
| | | | AU | 6448380 A | 28-05-1981 |
| | | | BE | 886223 A1 | 18-05-1981 |
| | | | CA | 1135440 A1 | 09-11-1982 |
| US 5223577 | A | 29-06-1993 | DE | 4030351 A1 | 02-04-1992 |
| | | | EP | 0460455 A2 | 11-12-1991 |
| | | | ES | 2066265 T3 | 01-03-1995 |
| | | | JP | 4227915 A | 18-08-1992 |
| US 4587294 | A | 06-05-1986 | CA | 1221786 A1 | 12-05-1987 |
| | | | DE | 3339531 A1 | 10-05-1984 |
| | | | FR | 2535727 A1 | 11-05-1984 |
| | | | GB | 2129433 A | 16-05-1984 |
| | | | IN | 161945 A1 | 05-03-1988 |
| | | | IT | 1169921 B | 03-06-1987 |
| | | | JP | 1574316 C | 20-08-1990 |
| | | | JP | 59084912 A | 16-05-1984 |
| | | | JP | 63002284 B | 18-01-1988 |
| EP 0412801 | A1 | 13-02-1991 | AU | 624015 B2 | 28-05-1992 |
| | | | AU | 6029590 A | 14-02-1991 |
| | | | BR | 9003925 A | 03-09-1991 |
| | | | CA | 2022925 A1 | 10-02-1991 |
| | | | DE | 69008971 D1 | 23-06-1994 |
| | | | DE | 69008971 T2 | 01-09-1994 |
| | | | ES | 2053116 T3 | 16-07-1994 |
| | | | HK | 80094 A | 19-08-1994 |
| | | | JP | 2879361 B2 | 05-04-1999 |
| | | | JP | 3103414 A | 30-04-1991 |
| | | | US | 5240993 A | 31-08-1993 |
| EP 0808856 | B | 19-09-2001 | AT | 205860 T | 15-10-2001 |
| | | | CA | 2204662 A1 | 21-11-1997 |
| | | | CN | 1170006 A | 14-01-1998 |
| | | | DE | 69706759 D1 | 25-10-2001 |
| | | | DE | 69706759 T2 | 04-07-2002 |
| | | | DK | 808856 T3 | 12-11-2001 |
| | | | EP | 0808856 A1 | 26-11-1997 |
| | | | ES | 2160866 T3 | 16-11-2001 |
| | | | GR | 3036899 T3 | 31-01-2002 |
| | | | IT | MI961016 A1 | 21-11-1997 |
| | | | JP | 3681507 B2 | 10-08-2005 |
| | | | JP | 10053630 A | 24-02-1998 |
| | | | PT | 808856 T | 30-01-2002 |
| | | | RU | 2164232 C2 | 20-03-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 08 02 2507

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2009

| Patent document cited in search report | | Publication date | Patent family member(s) | | Publication date |
|---|---|---|---|---|---|
| EP 0808856 | B | | US 5807928 A | | 15-09-1998 |
| WO 9412551 | A | 09-06-1994 | AU 672260 B2 | | 26-09-1996 |
| | | | AU 5453694 A | | 22-06-1994 |
| | | | BR 9307632 A | | 31-08-1999 |
| | | | CA 2149656 A1 | | 09-06-1994 |
| | | | DE 69305092 D1 | | 31-10-1996 |
| | | | DE 69305092 T2 | | 03-04-1997 |
| | | | EP 0669947 A1 | | 06-09-1995 |
| | | | ES 2092338 T3 | | 16-11-1996 |
| | | | JP 8504450 T | | 14-05-1996 |
| | | | JP 3289239 B2 | | 04-06-2002 |
| | | | MX 9307246 A1 | | 29-07-1994 |
| US 5250611 | A | 05-10-1993 | DE 4110009 A1 | | 01-10-1992 |
| | | | EP 0505798 A1 | | 30-09-1992 |
| WO 02051894 | A | 04-07-2002 | KR 20020054103 A | | 06-07-2002 |
| KR 20000055398 | A | 05-09-2000 | NONE | | |
| US 4732807 | A | 22-03-1988 | DE 3573278 D1 | | 02-11-1989 |
| | | | EP 0153623 A1 | | 04-09-1985 |
| | | | JP 1904273 C | | 08-02-1995 |
| | | | JP 6035499 B | | 11-05-1994 |
| | | | JP 60165380 A | | 28-08-1985 |

EPO FORM P0459

For more details about this annex : see Official Journal of the European Patent Office, No. 12/82

**EP 2 075 270 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 412801 A
- EP 277687 A
- JP 8120032 A
- US 5250611 A
- US 5223577 A
- US 4277574 A
- KR 102007141056
- KR 102008108621